# EUROPÄISCHE PATENTSCHRIFT

(11) **EP 4 551 352 B1**
(45) Veröffentlichungstag und Bekanntmachung des Hinweises auf die Patenterteilung: **01.07.2026**
(21) Anmeldenummer: 23728745.3
(22) Anmeldetag: 25.05.2023
(51) Int. Cl.: B23K 26/03, B23K 26/082

(54) **LASERBEARBEITUNGSMASCHINE MIT FREQUENZKAMMBASIERTEM ABSTANDSSENSOR SOWIE ZUGEHÖRIGES VERFAHREN MIT FREQUENZKAMMBASIERTER ABSTANDSMESSUNG**
LASER MACHINE TOOL WITH FREQUENCY-COMB-BASED DISTANCE SENSOR AND ASSOCIATED METHOD USING FREQUENCY-COMB-BASED DISTANCE MEASUREMENT
MACHINE-OUTIL LASER AVEC CAPTEUR DE DISTANCE BASÉ SUR UN PEIGNE DE FRÉQUENCES ET PROCÉDÉ ASSOCIÉ UTILISANT UNE MESURE DE DISTANCE BASÉE SUR UN PEIGNE DE FRÉQUENCES

(30) Priorität: 07.07.2022 DE 102022116927
(43) Veröffentlichungstag der Anmeldung: 14.05.2025
(73) Patentinhaber: TRUMPF Laser GmbH, 78713 Schramberg (DE)
(72) Erfinder: HERMANI, Jan-Patrick, 71706 Markgroeningen (DE); HARTMANN, Matthias, 78628 Rottweil (DE); NEUDECK, Sebastian, 78713 Schramberg (DE); HAUG, Patrick, 70839 Gerlingen (DE)
(74) Vertreter: Trumpf Patentabteilung
(86) Internationale Anmeldenummer: PCT/EP2023/064016
(87) Internationale Veröffentlichungsnummer: WO 2024/008363

(56) Entgegenhaltungen:
- WO-A1-2022/024246
- US-A1- 2015 070 685
- C. WEIMANN ET AL: "Measurement of Length and Position with Frequency Combs", JOURNAL OF PHYSICS: CONFERENCE SERIES, INSTITUTE OF PHYSICS PUBLISHING, BRISTOL, GB, vol. 605, no. 1, 28 April 2015 (2015-04-28), pages 12030, XP020283434, ISSN: 1742-6596, [retrieved on 20150428], DOI: 10.1088/1742-6596/605/1/012030

## Beschreibung

Die Erfindung betrifft eine Laserbearbeitungsmaschine zur Laserbearbeitung mindestens eines Werkstücks mittels eines Bearbeitungslaserstrahls und mit einem Laserstrahlerzeuger zum Erzeugen des Bearbeitungslaserstrahls, mit einer Bearbeitungsoptik zum Richten des Bearbeitungslaserstrahls auf das mindestens eine Werkstück. Die Erfindung betrifft außerdem ein Verfahren zum Erfassen geometrischer Merkmale an mindestens einem Werkstück bei der Laserbearbeitung.

Eine derartige Laserbearbeitungsmaschine mit einer zusätzlichen interferometrischen Abstandsmessung in Form eines scannenden OCT (optical coherence tomography)-Abstandssensors ist beispielsweise durch DE 10 2019 132 619 A2 oder DE 10 2020 203 983 A1 bekannt geworden.

Weiter offenbart die WO 2022/024246 A1 den Oberbegriff des Anspruchs 1.

Das Messen von Abständen zur Bestimmung von geometrischen Werkstückmerkmalen (Fügepositionen, Einschweißtiefe, Nahtgeometrie) ist eine zentrale Anforderung an Sensoren zur Kontrolle von Laserschweißprozessen. OCT-Abstandssensoren mit motorisiert nachstellbarer und in Form einer zusätzlichen Komponente ausgeführter Referenzstrecke (Referenzarm) haben sich hierfür in den letzten Jahren etabliert. Der schuhschachtelgroße OCT-Abstandssensor ist meist in einem Schaltschrank angeordnet und per Faser mit der Bearbeitungsoptik verbunden. Der Referenzarm ist entweder im OCT-Sensor integriert oder von der Bearbeitungsoptik abgesetzt nahe eines OCT-Scanners angebracht. Weglängenunterschiede von einzelnen Mikrometern können nur bei Verkleinerung des Messbereichs aufgelöst werden, d.h., eine flexible Anpassung von Auflösung und Messbereich ist nicht möglich, sondern erfordert eine Hardware-Änderung des OCT-Abstandssensors.

Der Einsatz von OCT-Abstandssensoren zur interferometrischen Abstandsmessvorrichtung in Laserbearbeitungsmaschinen kann allerdings folgende Nachteile aufweisen:
- verstellbarer Referenzarm notwendig wegen des nur sehr kleinen Messbereichs (nur ca. 12 mm);
- z-Auflösung nicht ausreichend für die bei der Laserbearbeitung von dünnen Blechen, z.B. mit 50 µm oder 100 µm Dicke, geforderte z-Auflösung von weniger als 12 µm, z.B. 1 µm bzw. sub-µm-Bereich;
- nicht in die Bearbeitungsoptik integrierbar, sondern aufwändiger und teurer Spektrometeraufbau mit Freistrahloptik erforderlich.

Demgegenüber ist es eine Aufgabe der vorliegenden Erfindung, eine Laserbearbeitungsmaschine und ein Verfahren der eingangs genannten Art dahingehend weiterzubilden, dass die oben genannten Nachteile überwunden werden können.

Diese Aufgabe wird erfindungsgemäß gelöst durch einen frequenzkammbasierten Abstandssensor mit einer frequenzverschoben rückgekoppelten Laserquelle zum Erzeugen eines Sensorlaserstrahls mit einem sich über die Zeit spektral verschiebenden Frequenzkamm, mit einer Messstrecke und einer Referenzstrecke (auch Messarm bzw. Referenzarm genannt), auf denen der Sensorlaserstrahl in einen Messstrahl und einen Referenzstrahl aufgeteilt ist, mit einem Detektor, an dem zurücklaufende Messstrahlen und Referenzstrahlen überlagert werden, und mit einer Auswertungseinrichtung, die anhand der sich aus einem Laufzeitunterschied der Messstrahlen und Referenzstrahlen ergebenden Frequenzdifferenz der beiden aus der Messstrecke sowie Referenzstrecke stammenden Frequenzkämme einen Abstandswert ermittelt.

Bei den Frequenzkämmen handelt es sich bevorzugt um cw (continuous wave) - Frequenzkämme, aber auch gepulste Frequenzkämme sind möglich.

Frequenzkammbasierte Abstandsmessungen sind grundsätzlich bekannt und beispielsweise in DE 10 2012 001 754 A1, WO 03/061084 A1, WO 2018/005987 A1 und JP 2021-021744 A1 beschrieben.

Bei der erfindungsgemäßen frequenzkammbasierten Abstandsmessung mittels frequenzverschoben rückgekoppelter Laserquelle (Frequency-Shifted-Feedback Ranging = FSF-Ranging) wird ein Frequenzkamm mit sich über die Zeit spektral verschiebenden Frequenzkammzinken in einem interferometrischen Aufbau in die Messstrecken und Referenzstrecken aufgespalten, welche unterschiedlich lange optische Wege besitzen. Das aus den Mess- und Referenzstrecken zurückkehrende Licht wird am Detektor überlagert. Dabei resultiert die sich aus dem Laufzeitunterschied ergebende Frequenzdifferenz der beiden Frequenzkämme in einer Schwebungsfrequenz, aus der sich dann der Weglängenunterschied zwischen Messstrecke und Referenzstrecke, also ein relativer Abstandswert oder bei bekannter Referenzstrecke ein absoluter Abstandswert, ableiten lässt.

Bei der frequenzkammbasierten Abstandsmessung kann aufgrund des großen Eindeutigkeitsbereichs bei den im Laserbearbeitungsprozess erwartbaren maximalen Wegunterschieden (ca. 150mm bis 200mm) auf eine mechanische Nachführung des Referenzarms verzichtet werden.

Für die Lasermaterialbearbeitung bietet die frequenzkammbasierte Abstandsmessung erhebliche Vorteile wegen des großen axialen Messbereichs bei zugleich hoher axialer Auflösung von 1 µm bis hin zum Sub-µm-Bereich. Weiterhin sind Vorteile bei der Signalqualität gegeben, da die Signalstärke nicht quadratisch, sondern nur nach einem linearen Verlauf mit dem Messabstand abnimmt. Die vorgeschlagene Abstandssensorik lässt sich für verschiedenste Zwecke bei der Laserbearbeitung nutzbar machen, vornehmlich bei Laserschweißprozessen zur Nahtlageregelung, Einschweißtiefenmessung, Nahtgütenbewertung im Nachlauf und Fokuslagenregelung; bei der Mikrobearbeitung zur hochgenauen Oberflächen(struktur)kontrolle, zur Kontrolle des Schichtabtrags zwischen einzelnen Abtragsschritten und generell z.B. zur Bauteillage- und Formerkennung und damit verbunden einer adaptiven Anpassung und Ausrichtung einer zu bearbeitenden Geometrie. Weiterhin denkbar sind Anwendungen in der generativen Fertigung (LMF/LMD), z.B. Schichtdickenmessung, Erfassung der Bauteillage bei Generierung an vorhandenen Bauteilen.

Die Eignung der erfindungsgemäßen frequenzkammbasierten Abstandsmessung wurde anhand von Einschweißtiefenmessversuchen bestätigt: Die frequenzkammbasierte Abstandsmessung verhält sich robust gegen das Störlicht der Prozessemission und ist in der Lage, während der Laserbearbeitung Abstandswerte mit sub-µm-Auflösung aus der Dampfkapillare zu erfassen.

Die erfindungsgemäße frequenzkammbasierte Abstandsmessung resultiert insbesondere in folgenden Vorteilen gegenüber herkömmlicher OCT-Abstandmessung:
- kompletter Verzicht auf mechanische Nachstellung der Referenzstrecke (Referenzarm) möglich, hierdurch sind keine Messpausen und keine verschleißanfällige Aktorik erforderlich sowie geringere Kosten möglich;
- kein vom frequenzkammbasierten Abstandssensor abgesetzter Referenzarm erforderlich;
- höhere Auflösung als beim OCT-Abstandssensor, aktuell im sub-µm-Bereich;
- Einsatz für Mikrobearbeitung möglich;
- Unabhängigkeit von Auflösung und Messbereich, d.h., eine hohe Auflösung ist auch bei großem Messbereich möglich; z.B. Messbereiche von 300 mm bei Auflösungen von 100 nm. Der Messbereich ist dabei softwareseitig einstellbar.
- beliebige Festlegung eines kleinen Messfensters innerhalb eines großen Eindeutigkeitsbereichs; hierdurch Steigerung der Messrate, Ausblenden von Artefakten;
- linearer anstatt quadratischer Signalabfall über die Messdistanz;
- höheres Signal-Rausch-Verhältnis, größerer Messbereich bei Defokussierung;
- kein Spektrometer mit Freistrahloptik erforderlich;
- kostengünstiger Detektor (Diode anstatt Bildzeile) mit einfacherer Datenauswertung;
- stark vergrößerter Messbereich bis hin zu mehreren Metern durch Kaskadierung von Eindeutigkeitsbereichen.

Erfindungsgemäß weist der frequenzkammbasierte Abstandssensor eine zusätzliche Seed-Laserquelle zum Erzeugen von Injektionslaserlicht auf, dessen Phase mit einer zeitlich variablen Frequenz moduliert ist. Die frequenzverschoben rückgekoppelte Laserquelle ist mit dem Injektionslaserlicht gespeist, wodurch sich bei einer charakteristischen Modulationsfrequenz eine starke Intensitätsüberhöhung des Schwebungssignals und eine stark verbesserte Trennschärfe ergeben. Da sich die charakteristische Modulationsfrequenz mit dem Weglängenunterschied zwischen Mess- und Referenzarm verändert, kann auch diese auf einen Abstandswert zurückgeführt werden. Die Ermittlung der entsprechenden charakteristischen Modulationsfrequenz erfolgt bei unbekanntem Abstand, indem das RMS (root mean
square)-Signal des Detektors über den bekannten zeitlichen Verlauf der aufgeprägten Phasenmodulation aufgezeichnet wird: Die Modulationsfrequenz, bei welcher das RMS-Signal maximal wird, ist die auf den Abstand zurückzuführende Frequenz, wodurch der Abstand mit ausreichend hoher Genauigkeit bestimmt werden kann.

Die frequenzkammbasierte Abstandsmessung ist in der Lage, anhand eines Messfensters einen verkleinerten Ausschnitt des Eindeutigkeitsbereichs auf Abstandswerte abzutasten und durch die hiermit verbundene Reduktion des Phasenmodulationsbereichs die Messrate zu erhöhen. Gleichzeitig können Störsignale (ungewollte Reflexionen) durch entsprechende Positionierung des Messfensters ausgeblendet werden. Zur Festlegung der Messfensterposition benötigt das Messverfahren als Input einen Erwartungswert der Phasenmodulationsfrequenz respektive des Abstands, welcher der Weglängendifferenz zwischen Messobjekt (Werkstück) und Referenzobjekt (z.B. Schutzglas) entspricht. Je nach Ausprägung der Datenvorverarbeitung im frequenzkammbasierten Abstandssensor wird für eine Einzelmessung lediglich ein Abstandswert oder auch ein ganzes Abstandswertespektrum entlang der Messachse (begrenzt durch das Messfenster) aufgenommen. Die Nachbereitung und Auswertung der Daten findet entsprechend deren Komplexität (Punktmessung oder scannende Linienmessung) statt. Im einfachsten Fall lässt sich diese direkt in einer Maschinensteuerung vornehmen, im komplexen Fall ist hierfür ein Bildverarbeitungs-PC oder eine Hochleistungs-Grafikkarte erforderlich.

Die Größe des Eindeutigkeitsbereichs ermöglicht es weiterhin (u.U. in Verbindung mit der Möglichkeit zur Kaskadierung von Eindeutigkeitsbereichen entlang der Messachse), die Referenzstrecke als Bestandteil der Messstrecke auszuführen. Bevorzugt ist die Referenzstrecke daher vollständig in der Messstrecke enthalten, also der Referenzarm vollständig in den Messarm integriert, so dass eine Temperaturdrift von Mess- und Referenzarm identisch ist und sich folglich aufhebt. Zudem ermöglicht diese Maßnahme eine geringere Sensorgröße.

Als Referenzebene wird im einfachsten Fall das Ende einer Messfaser genutzt. **In** einer besonders bevorzugten Ausführungsform der erfindungsgemäßen Laserbearbeitungsmaschine ist im Strahlengang des Sensorlaserstrahls ein optisches Element angeordnet, dessen dem frequenzkammbasierten Abstandssensor zugewandte Seite eine Reflektivität für den Sensorlaserstrahl von mindestens 1%, bevorzugt von mindestens 5%, aufweist, um den Sensorlaserstrahl als Messstrahl durchzulassen und als Referenzstrahl zu reflektieren. Statt wie herkömmlich zur Reduzierung von Strahlungsverlusten die Reflektivität eines optischen Elements für den Sensorlaserstrahl zu minimieren, wird die Reflektivität des optischen Elements erfindungsgemäß erhöht, um den am optischen Element reflektierten Anteil des Sensorlaserstrahls als Referenzstrahl zu nutzen. Mit herkömmlichen OCT-Ansätzen ist ein solcher Aufbau nicht möglich, da der Weglängenunterschied zwischen dem optischen Element im Strahlengang und dem Werkstück nicht kompensiert werden kann. In einer vorteilhaften Weiterbildung dieser Ausführungsform ist das optische Element durch ein Schutzglas, durch eine Fokuslinse der Bearbeitungsoptik oder durch ein Faserende einer für Mess- und Referenzstrahl gemeinsam genutzten Faser gebildet.

Vorzugsweise weist die Bearbeitungsoptik einen Bearbeitungsscanner (Makroscanner), z.B. in Form eines Galvanometers mit Spiegeln, auf, um den Bearbeitungslaserstrahl ein- oder zweidimensional auf dem mindestens einen Werkstück ablenken zu können.

In einer besonders bevorzugten Ausführungsform der erfindungsgemäßen Laserbearbeitungsmaschine ist sowohl im Strahlengang des Bearbeitungslaserstrahls als auch im Strahlengang des Sensorlaserstrahls ein Spiegel angeordnet, der den Bearbeitungslaserstrahl und den Sensorlaserstrahl koaxial zueinander ausrichtet. Bei dem Spiegel kann es sich beispielsweise um einen schräggestellten Strahlteilerspiegel, der für den Bearbeitungslaserstrahl reflektiv und für den Sensorlaserstrahl transmissiv ist oder umgekehrt, oder auch um einen Scraperspiegel, Lochspiegel, etc. handeln. In einer vorteilhaften Weiterbildung dieser Ausführungsform ist zwischen dem frequenzkammbasierten Abstandssensor und dem Spiegel ein Sensorscanner (Mikroscanner) angeordnet, der den Sensorlaserstrahl ein- oder zweidimensional ablenkt, um das mindestens eine Werkstück abzutasten. Dem Bearbeitungsscanner ist somit der Sensorscanner vorgelagert, um eine Relativbewegung zwischen Messstrahl und Bearbeitungslaserstrahl zu ermöglichen.

Besonders vorteilhaft ist der frequenzkammbasierte Abstandssensor zumindest teilweise, insbesondere ausschließlich, in Faseroptik ausgeführt, was einen kompakten Sensoraufbau und eine hohe Robustheit gegen mechanische Vibrationen und Schocks sowie eine kompakte Bauweise ermöglicht. Die frequenzkammbasierte Abstandsmessung erfordert - im Gegensatz zum OCT - keinen raumfordernden Interferometeraufbau. In Verbindung mit dem bereits beschriebenen Entfall eines separaten Referenzarms und der prinzipbedingten Ausführung in kompakter Faseroptik ermöglicht dies eine platzsparende Integration in Laserbearbeitungsoptiken. Für höhere Messraten und eine hochintegrierte Bauweise kann der frequenzkammbasierte Abstandssensor alternativ auch als photonischer Schaltkreis auf Siliziumbasis ausgeführt sein.

Vorzugsweise ist der frequenzkammbasierte Abstandssensor, insbesondere wenn in Faseroptik ausgeführt, an der Bearbeitungsoptik befestigt oder in die Bearbeitungsoptik integriert. Ein zusätzlicher teurer Sensorikschaltschrank wird daher nicht mehr benötigt. Der frequenzkammbasierte Abstandssensor ist beispielsweise ein hochintegriertes Hardware-Modul, das modular an oder in die Bearbeitungsoptik geschraubt werden kann. Alternativ kann der frequenzkammbasierte Abstandssensor aber auch im Lasergerät oder einem separaten Schaltschrank angeordnet sein. In diesem Fall muss das Messlicht per Faser parallel zum Lichtleitkabel des Bearbeitungslasers zur Bearbeitungsoptik geführt werden. Das Messlicht kann auch in der Faser des Bearbeitungslasers zur Bearbeitungsoptik geführt werden, allerdings muss hierfür eine ausreichende spektrale Trennung der beiden Lichtanteile vorhanden sein.

Der frequenzkammbasierte Abstandssensor kann direkt an die Bearbeitungsoptik angebracht sein oder alternativ auch in einem von der Bearbeitungsoptik abgesetzten Lasergerät integriert sein, wobei in diesem Fall der Sensorlaserstrahl wie auch der Bearbeitungslaserstrahl über eine gemeinsame Faser vom Lasergerät zur Bearbeitungsoptik geführt werden. Da der Abstandssensor ohnehin eine Faser zur Führung der Mess-/Referenzstrahlung aufweisen kann, könnte diese mit der Faser, welche zur Führung der Bearbeitungslaserstrahlung von Lasergerät zur Optik dient, zusammenfallen. Dabei kann z.B. die gemeinsame Faser an deren Ende für den Sensorlaserstrahl des Abstandssensors geringfügig reflektiv ausgeführt werden, sodass diese auch die Referenzstrecke darstellt.

Die Erfindung betrifft auch ein Verfahren zum Erfassen geometrischer (Tiefen)-Merkmale an mindestens einem Werkstück bei der Laserbearbeitung mittels einer wie oben beschriebenen Laserbearbeitungsmaschine, wobei der Messstrahl des frequenzkammbasierten Abstandssensors auf ein geometrisches Merkmal des Werkstücks gerichtet wird und anhand der sich aus einem Laufzeitunterschied der Mess- und Referenzstrahlen ergebenden Frequenzdifferenz der beiden aus der Mess- sowie Referenzstrecke stammenden Frequenzkämme ein Abstandswert bzw. eine Tiefe des geometrischen Merkmals ermittelt wird. Durch ein- oder zweidimensionales Abscannen des geometrischen Merkmals mittels des Messstrahls kann ein entsprechendes Tiefenprofil des geometrischen Merkmals gewonnen werden. Bei dem geometrischen Merkmal kann es sich beispielsweise um die Fügeposition, Einschweißtiefe oder Nahtgeometrie beim Laserschweißen handeln.

Weitere Vorteile der Erfindung ergeben sich aus der Beschreibung und der Zeichnung. Ebenso können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigt:
- Fig. 1: schematisch eine erste Ausführungsform einer erfindungsgemäßen Laserbearbeitungsmaschine mit einer Festoptik für einen Bearbeitungslaserstrahl und mit einem frequenzkammbasierten Abstandssensor; und
- Fig. 2: schematisch eine zweite Ausführungsform einer erfindungsgemäßen Laserbearbeitungsmaschine mit einer programmierbaren Fokussieroptik für einen Bearbeitungslaserstrahl und mit einem frequenzkammbasierten Abstandssensor.

In der folgenden Beschreibung der Zeichnung werden für gleiche bzw. funktionsgleiche Bauteile identische Bezugszeichen verwendet.

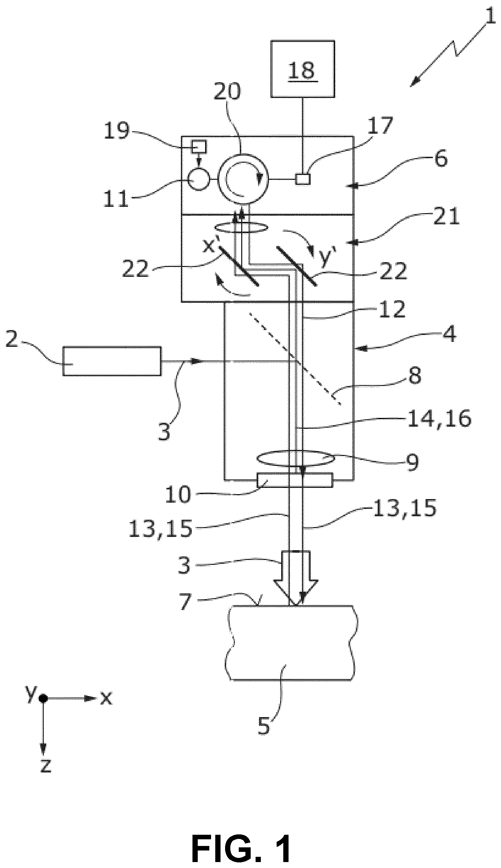

Die in **Fig. 1** schematisch gezeigte Laserbearbeitungsmaschine **1** weist einen Laserstrahlerzeuger **2** zum Erzeugen eines Bearbeitungslaserstrahls **3,** eine Bearbeitungsoptik **4,** hier in Form einer Festoptik, zum Richten des Bearbeitungslaserstrahls 3 auf ein Werkstück **5,** sowie einen frequenzkammbasierten Abstandssensor **6** zum interferometrischen Messen von Abständen auf, um geometrische Merkmale (Fügepositionen, Einschweißtiefe, Nahtgeometrie beim Laserschweißen) bei der Werkstückoberfläche **7** der Werkstücks 5 zu bestimmen.

Die Bearbeitungsoptik 4 umfasst einen für den Bearbeitungslaserstrahl 3 reflektiven, schräggestellten Spiegel **8,** an dem der Bearbeitungslaserstrahl 3 um 90° umgelenkt wird, sowie eine Fokuslinse **9** zum Fokussieren des abgelenkten Bearbeitungslaserstrahls 3 auf das Werkstück 5 und ein Schutzglas **10,** durch das der fokussierte Bearbeitungslaserstrahl 3 aus der Festoptik 4 austritt.

Der frequenzkammbasierte Abstandssensor 6 weist in bekannter Weise eine frequenzverschoben rückgekoppelte Laserquelle (Frequenzkammgenerator) **11** zum Erzeugen eines Sensorlaserstrahls **12** mit einem sich über die Zeit spektral verschiebenden cw-Frequenzkamm, eine Messstrecke **13** und eine Referenzstrecke **14,** auf denen der Sensorlaserstrahl 12, wie unten beschrieben, in einen Messstrahl **15** bzw. einen Referenzstrahl **16** aufgeteilt ist, einen Detektor **17,** an dem zurücklaufende Messstrahlen 15 und Referenzstrahlen 16 überlagert werden, und eine Auswertungseinrichtung **18** auf, die anhand der sich aus einem Laufzeitunterschied der Messstrahlen 15 und Referenzstrahlen 16 ergebenden Frequenzdifferenz der Frequenzkämme der zurücklaufenden Messstrahlen 15 und Referenzstrahlen 16 einen Abstandswert ermittelt. Der Sensorlaserstrahl 12 ist demnach ein Laserstrahl, welcher im Abstandssensor 6 erzeugt wird. Optional kann der Abstandssensor 6 noch eine zusätzliche Seed-Laserquelle **19** zum Erzeugen von Injektionslaserlicht aufweisen, mit dem die frequenzverschoben rückgekoppelte Laserquelle 11 gespeist ist. Dabei wird die Phase des Injektionslaserlichts mit einer zeitlich variablen Frequenz moduliert. Ein optischer Zirkulator **20** dient dazu, das von der Laserquelle 11 ausgesandte Licht auf das Werkstück 5 und die rückreflektierten Messstrahlen 15 und Referenzstrahlen 16 auf den Detektor 17 zu leiten. Der optische Zirkulator **20** ist etwa ein faseroptischer Zirkulator im Einzelmodus (Single Mode).

An den Abstandssensor 6 schließt sich ein Sensorscanner **21** an, um den Sensorlaserstrahl 12 auf der Werkstückoberfläche 7 ein- oder zweidimensional, also in x- und/oder y-Richtung, abzulenken und so einen Bereich der Werkstückoberfläche 7 beispielsweise mit Linienscans abzuscannen. Der Sensorscanner 21 kann beispielsweise einen um zwei Achsen ablenkbaren Scannerspiegel oder, wie in Fig. 1 gezeigt, zwei jeweils um eine Achse ablenkbare Scannerspiegel **22** aufweisen.

Über den für den Sensorlaserstrahl 12 transmissiven, schräggestellten Spiegel 8 wird der Sensorlaserstrahl 12 koaxial zum Bearbeitungslaserstrahl 3 in die Bearbeitungsoptik 4 eingekoppelt und durch die Fokuslinse 9 und das Schutzglas 10 hindurch auf das Werkstück 5 gerichtet. Die dem Abstandssensor 6 zugewandte Seite des Schutzglases 10 weist für den Sensorlaserstrahl 12 eine Reflektivität von mindestens 1%, bevorzugt ca. 5%, auf, um so den Sensorlaserstrahl 12 am Schutzglas 10 in den transmittierten Messstrahl 15 und den reflektierten Referenzstrahl 16 aufzuspalten. Der Messstrahl 15 wird an der Werkstückoberfläche 7 reflektiert und läuft über die Bearbeitungsoptik 4 und den Sensorscanner 21 zurück zum Abstandssensor 6. Der vom Sensorlaserstrahl 12 und nach seiner Aufspaltung vom Messstrahl 15 insgesamt durchlaufene optische Weg definiert die Messstrecke 13, und der vom Sensorlaserstrahl 12 und nach seiner Aufspaltung vom Referenzstrahl 16 insgesamt zurückgelegte optische Weg definiert die Referenzstrecke 14. Die Referenzstrecke 14 ist also vollständig in der Messstrecke 13 enthalten.

Bei der frequenzkammbasierten Abstandsmessung wird mittels der frequenzverschoben rückgekoppelten Laserquelle (Frequency-Shifted-Feedback Ranging = FSF-Ranging) 11 ein cw-Frequenzkamm mit sich über die Zeit spektral verschiebenden Frequenzkammzinken in einem interferometrischen Aufbau in die Messstrecke 13 und die Referenzstrecke 14 aufgespalten, welche unterschiedlich lange optische Wege besitzen. Die aus der Messstrecke 13 und der Referenzstrecke 14 zurückkehrenden Messstrahlen 15 und Referenzstrahlen 16 werden an dem Detektor 17 überlagert. Dabei resultiert die sich aus dem Laufzeitunterschied ergebende Frequenzdifferenz der cw-Frequenzkämme der Messstrahlen 15 und Referenzstrahlen 16 in einer Schwebungsfrequenz, aus der von der Auswertungseinheit 18 der Weglängenunterschied zwischen Messstrecke 13 und Referenzstrecke 14, also ein relativer Abstandswert oder bei bekannter Referenzstrecke 14 ein absoluter Abstandswert, abgeleitet werden kann. Jedoch zeichnet sich die Abstandsinformation nur diffus im Schwebungsfrequenzspektrum ab, die Abstandsbestimmung ist dementsprechend ungenau. Wird die frequenzverschoben rückgekoppelte Laserquelle 11 mit dem zusätzlichen Injektionslicht der Seed-Laserquelle 19 gespeist, dessen Phase mit einer zeitlich variablen Frequenz moduliert ist, so ergibt sich bei einer charakteristischen Modulationsfrequenz eine starke Intensitätsüberhöhung des Schwebungssignals und eine stark verbesserte Trennschärfe. Da sich die charakteristische Modulationsfrequenz mit dem Weglängenunterschied zwischen Messstrecke 13 und Referenzstrecke 14 verändert, kann auch diese auf einen Abstandswert zurückgeführt werden. Die Ermittlung der entsprechenden charakteristischen Modulationsfrequenz erfolgt bei unbekanntem Abstand, indem das RMS-Signal des Detektors 17 über den bekannten zeitlichen Verlauf der aufgeprägten Phasenmodulation aufgezeichnet wird: Die Modulationsfrequenz, bei welcher das RMS-Signal maximal wird, ist die auf den Abstand zurückzuführende Frequenz.

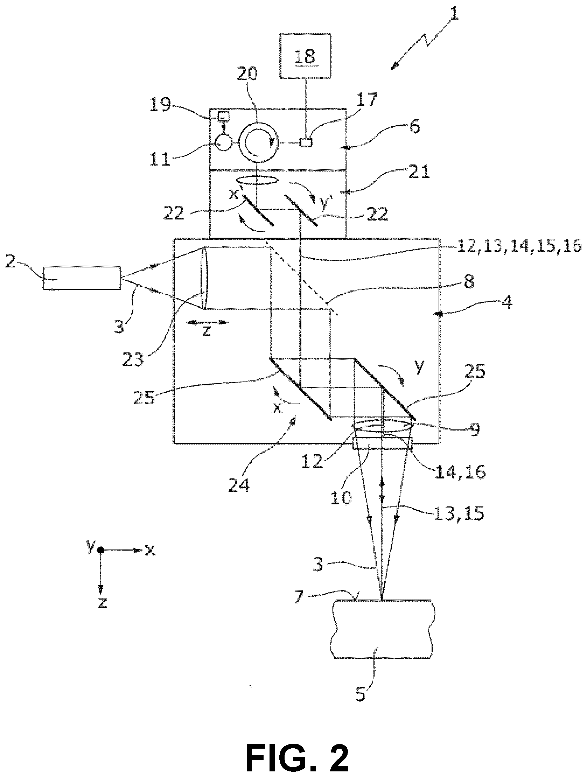

Von der Laserbearbeitungsmaschine 1 der Fig. 1 unterscheidet sich die in Fig. 2 gezeigte Laserbearbeitungsmaschine 1 dadurch, dass die Bearbeitungsoptik 4 nicht als Festoptik, sondern als programmierbare Fokussieroptik ausgebildet ist. Die programmierbare Fokussieroptik ist ein 2-Achs-Laserscanner (x-y), der optional auch über eine entlang der Strahlachse (z) verschiebbare Kollimationslinse **23** verfügen kann. Die Kollimationslinse 23 ist im Strahlengang des Bearbeitungslaserstrahls 3 vor dem Spiegel 8 angeordnet, wodurch der Fokus des Bearbeitungslaserstrahls 3 entlang der Strahlrichtung z verschoben werden kann. Zusätzlich weist die Bearbeitungsoptik 4 zwischen Spiegel 8 und Fokuslinse 9 einen Bearbeitungsscanner **24** auf, um den Bearbeitungslaserstrahl 3 - und damit auch den Sensorlaserstrahl 12 - auf der Werkstückoberfläche 7 ein- oder zweidimensional, also in x- und/oder y-Richtung, abzulenken. Der Bearbeitungsscanner 24 kann beispielsweise einen um zwei Achsen ablenkbaren Scannerspiegel oder, wie in Fig. 2 gezeigt, zwei jeweils um eine Achse ablenkbare Scannerspiegel **25** aufweisen. Wie in Fig. 2 weiter gezeigt, kann der Sensorlaserstrahl 12 bzw. der Messstrahl 15 mithilfe des Sensorscanners 21 gegenüber dem Bearbeitungslaserstrahl 3 und unabhängig vom Bearbeitungslaserstrahl 3 abgelenkt werden, um beispielsweise die Werkstückoberfläche 7 im Vor- und im Nachlauf der Schweißposition des Bearbeitungslasers 3 zu vermessen.

Die Eignung der frequenzkammbasierten Abstandsmessung wurde anhand von Einschweißtiefenmessversuchen bestätigt: Die frequenzkammbasierte Abstandsmessung verhält sich robust gegen das Störlicht der Prozessemission und ist in der Lage, während der Laserschweißbearbeitung Abstandswerte mit sub-µm-Auflösung aus der Dampfkapillare (Keyhole) zu erfassen.

Statt der in Fign. 1 und 2 beschriebenen cw-Frequenzkämme können alternativ auch gepulste Frequenzkämme verwendet werden.

## Patentansprüche

1. Laserbearbeitungsmaschine (1) zur Laserbearbeitung mindestens eines Werkstücks (5) mittels eines Bearbeitungslaserstrahls (3),
mit einem Laserstrahlerzeuger (2) zum Erzeugen des Bearbeitungslaserstrahls (3),
mit einer Bearbeitungsoptik (4) zum Richten des Bearbeitungslaserstrahls (3) auf das mindestens eine Werkstück (5), und
mit einem frequenzkammbasierten Abstandssensor (6) zum Messen von Abständen zur Bestimmung von geometrischen Merkmalen des mindestens einen Werkstücks (5), wobei der frequenzkammbasierte Abstandssensor (6) eine frequenzverschoben rückgekoppelte Laserquelle (11) zum Erzeugen eines Sensorlaserstrahls (12) mit einem sich über die Zeit spektral verschiebenden Frequenzkamm, eine Messstrecke (13) und eine Referenzstrecke (14), auf denen der Sensorlaserstrahl (12) in einen Mess- und einen Referenzstrahl (15, 16) aufgeteilt ist, einen Detektor (17), an dem zurücklaufende Mess- und Referenzstrahlen (15, 16) überlagert werden, und eine Auswertungseinrichtung (18), die anhand der sich aus einem Laufzeitunterschied der Messstrahlen (15) und Referenzstrahlen (16) ergebenden Frequenzdifferenz der beiden aus der Messstrecke (13) sowie Referenzstrecke (14) stammenden Frequenzkämme einen Abstandswert ermittelt, aufweist, **dadurch gekennzeichnet, dass** der frequenzkammbasierte Abstandssensor (6) eine zusätzliche Seed-Laserquelle (19) zum Erzeugen von Injektionslaserlicht aufweist, dessen Phase mit einer zeitlich variablen Frequenz moduliert ist, wobei die frequenzverschoben rückgekoppelte Laserquelle (11) mit dem Injektionslaserlicht gespeist ist.

2. Laserbearbeitungsmaschine (1) nach Anspruch 1, **dadurch gekennzeichnet, dass** die Referenzstrecke (14) vollständig in der Messstrecke (13) enthalten ist.

3. Laserbearbeitungsmaschine (1) nach einem der vorhergehenden Ansprüche, **dadurch gekennzeichnet, dass** im Strahlengang des Sensorlaserstrahls (12) ein optisches Element (9, 10) angeordnet ist, dessen dem frequenzkammbasierten Abstandssensor (6) zugewandte Seite eine Reflektivität für den Sensorlaserstrahl (12) von mindestens 1% aufweist, um den Sensorlaserstrahl (12) in einen transmittierten Messstrahl (15) und einen reflektierten Referenzstrahl (16) aufzuteilen.

4. Laserbearbeitungsmaschine (1) nach Anspruch 3, **dadurch gekennzeichnet, dass** das optische Element durch ein Schutzglas (9), durch eine Fokuslinse (9) der Bearbeitungsoptik (4) oder durch ein Faserende einer für die Messstrahlen (15) und die Referenzstrahlen (16) gemeinsam genutzten Faser gebildet ist.

5. Laserbearbeitungsmaschine (1) nach einem der vorhergehenden Ansprüche, **dadurch gekennzeichnet, dass** die Bearbeitungsoptik (4) einen Bearbeitungsscanner (24) zum ein- oder zweidimensionalen Ablenken des Bearbeitungslaserstrahls (3) auf dem mindestens einen Werkstück (5) aufweist.

6. Laserbearbeitungsmaschine (1) nach einem der vorhergehenden Ansprüche, **dadurch gekennzeichnet, dass** im Strahlengang des Bearbeitungslaserstrahls (3) und im Strahlengang des Sensorlaserstrahls (12) ein Spiegel (8) angeordnet ist, der den Bearbeitungslaserstrahl (3) und den Sensorlaserstrahl (12) koaxial zueinander ausrichtet.

7. Laserbearbeitungsmaschine (1) nach Anspruch 6, **dadurch gekennzeichnet, dass** zwischen dem frequenzkammbasierten Abstandssensor (6) und dem Spiegel (8) ein Sensorscanner (21) angeordnet ist, der den Sensorlaserstrahl (12) ein- oder zweidimensional ablenkt, um das mindestens eine Werkstück (5) abzutasten.

8. Laserbearbeitungsmaschine (1) nach einem der vorhergehenden Ansprüche, **dadurch gekennzeichnet, dass** der frequenzkammbasierte Abstandssensor (6) zumindest teilweise in Faseroptik oder als photonischer Schaltkreis auf Siliziumbasis ausgeführt ist.

9. Laserbearbeitungsmaschine (1) nach einem der vorhergehenden Ansprüche, **dadurch gekennzeichnet, dass** der frequenzkammbasierte Abstandssensor (6) an der Bearbeitungsoptik (4) befestigt oder in die Bearbeitungsoptik (4) integriert ist.

10. Laserbearbeitungsmaschine (1) nach einem der vorhergehenden Ansprüche, **dadurch gekennzeichnet, dass** der frequenzkammbasierte Abstandssensor (6) in einem von der Bearbeitungsoptik (4) abgesetzten Lasergerät integriert ist, wobei der Sensorlaserstrahl (12) wie auch der Bearbeitungslaserstrahl (3) über eine gemeinsame Faser vom Lasergerät zur Bearbeitungsoptik (4) geführt werden.

11. Verfahren zum Erfassen geometrischer Merkmale an mindestens einem Werkstück (5) bei der Laserbearbeitung mittels einer Laserbearbeitungsmaschine (1) nach einem der vorhergehenden Ansprüche, wobei der Messstrahl (15) des frequenzkammbasierten Abstandssensors (6) auf ein geometrisches Merkmal des Werkstücks (5) gerichtet wird und anhand der sich aus einem Laufzeitunterschied der Messstrahlen (15) und Referenzstrahlen (16) ergebenden Frequenzdifferenz der Frequenzkämme der Messstrahlen (15) und Referenzstrahlen (16) ein Abstandswert des geometrischen Merkmals ermittelt wird.

12. Verfahren nach Anspruch 11, **dadurch gekennzeichnet, dass** das geometrische Merkmal ein- oder zweidimensional abgescannt wird.

## Claims

1. A laser processing machine (1) for the laser machining of at least one workpiece (5) by means of a processing laser beam (3),
with a laser beam generator (2) for generating the processing laser beam (3), with processing optics (4) for directing the processing laser beam (3) onto the at least one workpiece (5), and
with a frequency comb-based distance sensor (6) for measuring distances for the purpose of determining geometric features of the at least one workpiece (5), wherein the frequency comb-based distance sensor (6) has a frequency-shifted, back-coupled laser source (11) for generating a sensor laser beam (12) with a frequency comb that shifts spectrally over time, a measurement path (13) and a reference path (14) on which the sensor laser beam (12) is subdivided into a measurement and a reference beam (15, 16), a detector (17) on which returning measurement and reference beams (15, 16) are superimposed, and an evaluation device (18) that ascertains a distance value on the basis of the frequency difference of the two frequency combs originating from the measurement path (13) and the reference path (14), said frequency difference resulting from a transit time difference of the measurement beam (15) and reference beam (16), **characterized in that** the frequency comb-based distance sensor (6) has an additional seed laser source (19) for generating injection laser light, the phase of which is modulated with a time-variable frequency, wherein the frequency-shifted back-coupled laser source (11) is fed in together with the injection laser light.

2. The laser processing machine (1) according to claim 1, **characterized in that** the reference path (14) is completely contained in the measurement path (13).

3. The laser processing machine (1) according to any one of the preceding claims, **characterized in that** an optical element (9, 10) is arranged in the beam path of the sensor laser beam (12), the side of the optical element facing the frequency comb-based distance sensor (6) having a reflectance for the sensor laser beam (12) of at least 1% in order to subdivide the sensor laser beam (12) into a transmitted measurement beam (15) and a reflected reference beam (16).

4. The laser processing machine (1) according to claim 3, **characterized in that** the optical element is formed by a shielding glass (9), by a focusing lens (9) of the processing optics (4), or by a fiber end of a fiber that is used in common for the measurement beams (15) and the reference beams (16).

5. The laser processing machine (1) according to any one of the preceding claims, **characterized in that** the processing optics (4) have a processing scanner (24) for one-dimensionally or two-dimensionally deflecting the processing laser beam (3) on the at least one workpiece (5).

6. The laser processing machine (1) according to any one of the preceding claims, **characterized in that** a mirror (8) is arranged in the beam path of the processing laser beam (3) and in the beam path of the sensor laser beam (12), the mirror directing the processing laser beam (3) and the sensor laser beam (12) coaxially toward one another.

7. The laser processing machine (1) according to claim 6, **characterized in that** a sensor scanner (21) is arranged between the frequency comb-based distance sensor (6) and the mirror (8), the scanner deflecting the sensor laser beam (12) one-dimensionally or two-dimensionally in order to scan the at least one workpiece (5).

8. The laser processing machine (1) according to any one of the preceding claims, **characterized in that** the frequency comb-based distance sensor (6) is designed at least in the form of fiber optics or as a silicon-based photonic circuit.

9. The laser processing machine (1) according to any one of the preceding claims, **characterized in that** the frequency comb-based distance sensor (6) is fastened to the processing optics (4) or integrated into the processing optics (4).

10. The laser processing machine (1) according to any one of the preceding claims, **characterized in that** the frequency comb-based distance sensor (6) is integrated in a laser apparatus that is separate from the processing optics (4), wherein the sensor laser beam (12) as well as the processing laser beam (3) are guided from the laser apparatus to the processing optics (4) via a common fiber.

11. A method for detecting geometric features on at least one workpiece (5) during laser machining by means of a laser processing machine (1) according to any one of the preceding claims, wherein the measurement beam (15) of the frequency comb-based distance sensor (6) is directed to a geometric feature of the workpiece (5) and a distance value of the geometric feature is ascertained based on the frequency difference of the frequency combs of the measurement beams (15) and the reference beams (16), said frequency difference resulting from a transit time difference of the measurement beams (15) and the reference beams (16).

12. The method according to claim 11, **characterized in that** the geometric feature is scanned one-dimensionally or two-dimensionally.

## Revendications

1. Machine de traitement laser (1) pour le traitement laser d'au moins une pièce (5) au moyen d'un faisceau laser de traitement (3),
avec un générateur de faisceau laser (2) pour générer le faisceau laser de traitement (3),
avec une optique de traitement (4) pour diriger le faisceau laser de traitement (3) vers ladite au moins une pièce (5), et
avec un capteur de distance basé sur un peigne de fréquences (6) pour mesurer des distances afin de définir des caractéristiques géométriques de ladite au moins une pièce (5), dans lequel le capteur de distance basé sur un peigne de fréquences (6) comprend une source laser à rétroaction décalée en fréquence (11) pour générer un faisceau laser de capteur (12) présentant un peigne de fréquences se décalant spectralement au cours du temps, un trajet de mesure (13) et un trajet de référence (14), sur lesquels le faisceau laser de capteur (12) est divisé en un faisceau de mesure et un faisceau de référence (15, 16), un détecteur (17) au niveau duquel des faisceaux de mesure et de référence (15, 16) de retour sont superposés, et un dispositif d'évaluation (18) qui détermine une valeur de distance à partir de la différence de fréquence résultant d'une différence de temps de propagation des faisceaux de mesure (15) et des faisceaux de référence (16) des deux peignes de fréquences provenant du trajet de mesure (13) ainsi que du trajet de référence (14), **caractérisée en ce que** le capteur de distance basé sur un peigne de fréquences (6) comprend une source laser d'ensemencement (19) supplémentaire pour générer une lumière laser d'injection dont la phase est modulée avec une fréquence variable dans le temps, dans lequel la source laser à rétroaction décalée en fréquence (11) est alimentée avec la lumière laser d'injection.

2. Machine de traitement laser (1) selon la revendication 1, **caractérisée en ce que** le trajet de référence (14) est entièrement contenu dans le trajet de mesure (13).

3. Machine de traitement laser (1) selon l'une des revendications précédentes, **caractérisée en ce qu'**un élément optique (9, 10) est disposé dans le chemin du faisceau du faisceau laser de capteur (12), dont le côté orienté vers le capteur de distance basé sur un peigne de fréquences (6) présente une réflectivité pour le faisceau laser de capteur (12) d'au moins 1 %, afin de diviser le faisceau laser de capteur (12) en un faisceau de mesure (15) transmis et un faisceau de référence (16) réfléchi.

4. Machine de traitement laser (1) selon la revendication 3, **caractérisée en ce que** l'élément optique est formé par une vitre de protection (9), par une lentille de focalisation (9) de l'optique de traitement (4) ou par une extrémité de fibre d'une fibre utilisée conjointement pour les faisceaux de mesure (15) et les faisceaux de référence (16).

5. Machine de traitement laser (1) selon l'une des revendications précédentes, **caractérisée en ce que** l'optique de traitement (4) comprend un scanner de traitement (24) pour la déviation unidimensionnelle ou bidimensionnelle du faisceau laser de traitement (3) sur ladite au moins une pièce (5).

6. Machine de traitement laser (1) selon l'une des revendications précédentes, **caractérisée en ce qu'**un miroir (8) est disposé dans le chemin du faisceau du faisceau laser de traitement (3) et dans le chemin du faisceau du faisceau laser de capteur (12), lequel aligne coaxialement le faisceau laser de traitement (3) et le faisceau laser de capteur (12) l'un par rapport à l'autre.

7. Machine de traitement laser (1) selon la revendication 6, **caractérisée en ce qu'**un scanner de capteur (21) est disposé entre le capteur de distance basé sur un peigne de fréquences (6) et le miroir (8), lequel dévie le faisceau laser de capteur (12) de manière unidimensionnelle ou bidimensionnelle afin de balayer ladite au moins une pièce (5).

8. Machine de traitement laser (1) selon l'une des revendications précédentes, **caractérisée en ce que** le capteur de distance basé sur un peigne de fréquences (6) est réalisé au moins partiellement en optique fibrée ou sous forme de circuit photonique à base de silicium.

9. Machine de traitement laser (1) selon l'une des revendications précédentes, **caractérisée en ce que** le capteur de distance basé sur un peigne de fréquences (6) est fixé à l'optique de traitement (4) ou intégré dans l'optique de traitement (4).

10. Machine de traitement laser (1) selon l'une des revendications précédentes, **caractérisée en ce que** le capteur de distance basé sur un peigne de fréquences (6) est intégré dans un appareil laser déporté par rapport à l'optique de traitement (4), dans lequel le faisceau laser de capteur (12) ainsi que le faisceau laser de traitement (3) sont guidés de l'appareil laser vers l'optique de traitement (4) via une fibre commune.

11. Procédé pour la détection de caractéristiques géométriques sur au moins une pièce (5) lors du traitement laser au moyen d'une machine de traitement laser (1) selon l'une des revendications précédentes, dans lequel le faisceau de mesure (15) du capteur de distance basé sur un peigne de fréquences (6) est dirigé vers une caractéristique géométrique de la pièce (5) et une valeur de distance de la caractéristique géométrique est déterminée à partir de la différence de fréquence des peignes de fréquences des faisceaux de mesure (15) et des faisceaux de référence (16) résultant d'une différence de temps de propagation des faisceaux de mesure (15) et des faisceaux de référence (16).

12. Procédé selon la revendication 11, **caractérisé en ce que** la caractéristique géométrique est balayée de manière unidimensionnelle ou bidimensionnelle.
